# EUROPEAN PATENT APPLICATION

(11) **EP 1 005 217 A1**
(43) Date of publication of application: **31.05.2000**
(21) Application number: 99917129.1
(22) Date of filing: 23.04.1999
(51) Int. Cl.: H04M 11/00, H04M 3/00, H04L 12/00, H04J 1/00, H04J 11/00

(54) **SYSTEM AND METHOD FOR DISCRETE MULTITONE COMMUNICATION**

(30) Priority: 06.05.1998 JP 12336098
(71) Applicant: MITSUBISHI DENKI KABUSHIKI KAISHA, Tokyo 100-8310 (JP)
(72) Inventor: MATSUMOTO, Wataru Mitsubishi Denki Kabushiki K., Tokyo 100-8310 (JP)
(74) Representative: Pfenning, Meinig & Partner
(86) International application number: JP9902173
(87) International publication number: WO9957877

(57) **Abstract**

Subcarriers in the DMT modem scheme are divided and allocated to each data communication unit (2b1 to 2bk) in a subscriber-side system B. For example, four subcarriers of ch10 to ch13 are allocated to a data communication unit (2b1), the next four subcarriers of ch14 to ch17 are allocated to a data communication unit (2b2), and the next four subcarriers of ch18 to ch21 are allocated to a data communication unit (2b3)···. Therefore, the data communication units (2b1 to 2bk) can concurrently receive data from a telephone station-side system A, which has received the data from a data communication network N2 or the like, via ADSL.lite modems (3b1 to 3bk) and one telephone line.

## Description

### TECHNICAL FIELD

The present invention relates to a discrete multitone communication system and a discrete multitone communication method for performing data communications between a plurality of data communication units via a telephone line based on a discrete multitone modem scheme.

### BACKGROUND ART

In recent years, the xDSL communication system such as the ADSL (Asymmetric Digital Subscriber Line) communication system, the HDSL (High-bitrate Digital Subscriber Line) communication system and the SDSL (Symmetric Digital Subscriber Line) communication system which can perform high-speed digital communication of several Mbits/sec using the existing telephone copper cable have been closely watched as a wired digital communication system. There is a discrete multitone (DMT) system as one of line codes in the xDSL communication mode, and this system is standardized by T1.413 of ANSI.

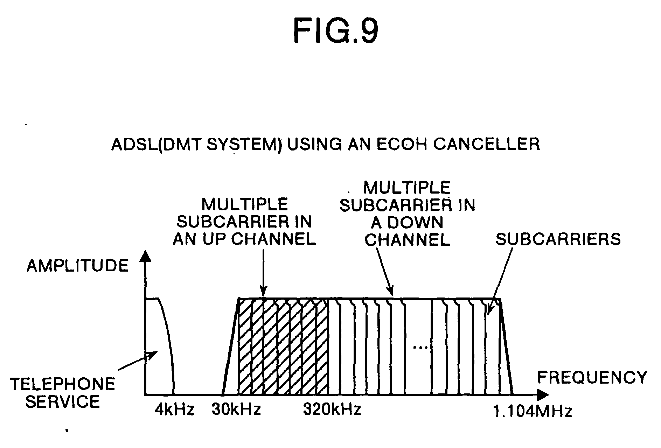

Fig. 9 shows a spectrum of a transmission signal based on a DMT modem scheme. In this figure, a band of not more than 4 KHz shows ordinary telephone service as audio band communications executed by using the audio band, and a band from 30 KHz to 320 KHz shows up-stream subcarriers in a case of the ADSL communications in the DMT system, whereas a band from the 30 KHz to about 1.1 MHz shows down-stream subcarriers in the case of the ADSL communications in the DMT system. In the ADSL communications in the DMT system, as the down-stream subcarriers overlap the up-stream subcarriers, the subcarriers are separated from each other by an echo canceller.

In the conventional type of DMT modem communication system, however, there are some problems such that, as one of data communication units performs communications by using all the subcarriers in the DMT modem scheme, the subcarriers in the DMT modem scheme can not effectively be used and at the same time the other data communication units can not perform communications.

It is an object of the present invention to provide a discrete multitone communication system and a discrete multitone communication method in which subcarriers in the DMT modem scheme can effectively be used and also a plurality of data communication units can concurrently perform communications.

### DISCLOSURE OF THE INVENTION

A discrete multitone communication system, according to the present invention, for performing data communications between a plurality of data communication units via a telephone line based on a discrete multitone modem scheme, wherein a carrier is divided in the discrete multitone modem scheme into a plurality of subcarriers in each frequency band, each divided subcarriers is allocated to each of the plurality of data communication units, and each of said data communication units performs data communications by using the allocated subcarriers.

In the present invention, each of the data communication units transmit data based on time division by using the allocated subcarriers.

In the present invention, each of the plurality of data communication units has a Fourier transform unit for subjecting only a band of the subcarriers allocated to the unit to Fourier transform for its demodulation.

In the present invention, each of the plurality of data communication units subjects only a band of the subcarriers allocated to the unit to Fourier transform for its demodulation according to each program respectively.

In the present invention, each of the plurality of data communication units has a communication address set therein so as to enable data communications via a data communication network respectively, and performs data communications via the data communication network according to the communication address.

In the present invention, each of a plurality of data communication units has a communication address set therein so as to enable data communications via a data communication network respectively, and further has a data communication managing unit, connected to a plurality of the other data communication units via a telephone line, comprising the steps of registering therein the communication addresses of the other data communication units; determining, when data with a communication address of a target communication unit set therein is received from an arbitrary data communication unit among the plurality of data communication units, whether the communication address set in the data is any of the communication addresses of the registered data communication units or not; making the data communication unit perform data communications with a target data communication unit via the data communication network when it is determined that the communication address set in the data is not any of the communication addresses of the registered data communication units; and making the arbitrary data communication unit and the communication unit indicated by the communication address set in the data bypass the data communication network and directly communicate to each other when it is determined that the communication address set in the data is any of the communication addresses of the registered data communication units.

In the present invention, an ADSL.lite communication system is used as the discrete multitone modem scheme.

A discrete multitone communication method, according to the present invention, for performing digital communications via a telephone line based on the discrete multitone modem scheme, wherein a carrier in the discrete multitone modem scheme is divided into a plurality of subcarriers in each frequency band, each divided subcarriers is allocated to each of a plurality of data communication units respectively, and each of said data communication unit performs data communications by using the allocated subcarriers respectively.

### BRIEF DESCRIPTION OF THE DRAWINGS

Fig. 1 is a view showing the entire DMT communication system according to Embodiment 1 of the present invention, Fig. 2 is a view showing detail configuration of a receiver side of an ADSL.lite modem 3b1 in Embodiment 1 of the DMT communication system according to the present invention, Fig. 3 is a view showing detail configuration of a transmitter side of an ADSL.lite modem 4a in Embodiment 1 of the DMT communication system according to the present invention, Fig. 4 is a view showing a method of dividing a down channel in the DMT communication system according to Embodiment 1, Fig. 5 is a view showing another configuration of DMT communication system according to Embodiment 1 of the present invention, Fig. 6 is a view showing a timing of data transmission to users in a subscriber-side system B of a DMT communication system according to Embodiment 2, Fig. 7 is a view showing the whole of a DMT communication system according to Embodiment 3, Fig. 8 is a view showing a specific example of data communication between data communication units within subscriber-side systems in Embodiment 3, and Fig. 9 is a view showing a spectrum of a transmission signal based on the DMT modem scheme.

### BEST MODE FOR CARRYING OUT THE INVENTION

Embodiment 1 of the discrete multitone (abbreviated as DMT hereinafter) communication system according to the present invention will be explained in detail below reference to the related drawings. In Embodiments 1 to 3 described below, an ADSL communication system will be described as a typical example of employing a communication system based on the DMT modem scheme.

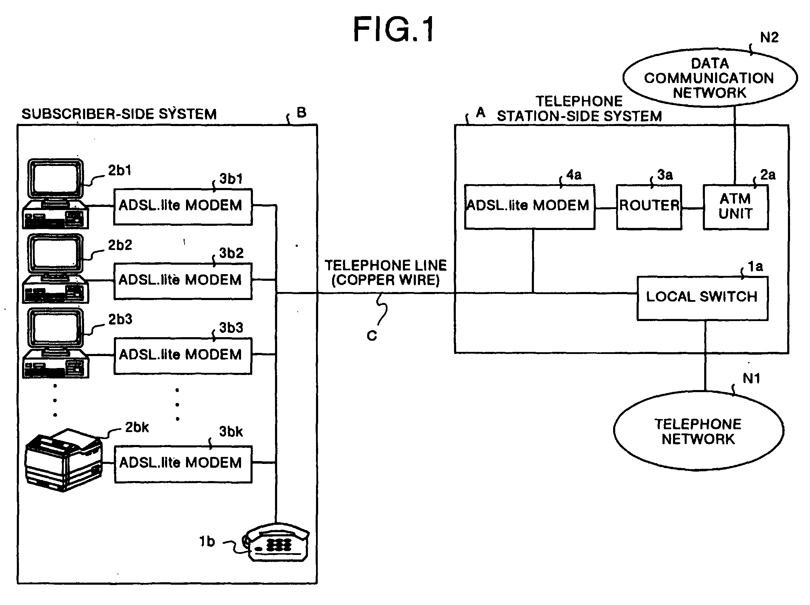

Fig. 1 shows the entire DMT communication system according to Embodiment 1 of the present invention. In this figure, the reference sign A shows a telephone station-side system, the reference sign B shows a plurality of subscriber-side systems (only one system is shown herein for convenience in description) each connected to the telephone station-side system A via a telephone line C, and the reference sign C shows an existing telephone line made of an existing twisted pair of copper wire or the like for connecting between the telephone station-side system A and the subscriber-side system B. The telephone station-side system A may be a system established in a privately such as by a company or an enterprise, because the system is decided depending on an area or some other conditions of a subscriber-side system B, or may include a system established publicly such as by the telephone stations area of NTT.

In the telephone station-side system A, the reference numeral 1a indicates a local switch for switching a telephone line connected to a telephone network N1, the reference numeral 2a indicates an ATM unit connected to a data communication network N2 such as the Internet, the reference numeral 3a represents a router, and the reference numeral 4a represents an ADSL.lite modem.

The ADSL.lite is a format for handling a splitter to filter the audio band of less than 4 kHz used for telephone telecommunications from a data-communication band of greater than 4 kHz used for data communications, and is an ADSL communication system standardized as G.lite in ITU-T standards. Further, the ADSL.lite modem 4a is an ADSL modem for enabling communications through modulation and demodulation of data directly connected to a telephone line C without a splitter (not shown).

With the data communication system of ADSL, the work for installing the splitter is required of an ordinary telephone subscriber, which led to the tendency of rejecting the introduction of this communication system. The communication system under consideration, on the other hand, has been proposed as a splitterless system with a low 1.5 Mbps communication speed specified in a standard. In view of this advantages that no special work is required as the system is free of the splitter, and that inspite of a lower ADSL transmission rate due to the noise interference between the audio band of the telephone service and the ADSL band of the data communication service and the impedance variations due to the communication in the telephone band having an effect on the ADSL communication, the transmission rate of about 1.5 Mbps is considered to satisfy the users for the time being to access the Internet.

In the subscriber-side system B, the reference numeral 1b is a telephone set connected to the existing telephone line C via a modular receptacle (not shown), reference numerals 2b1 to 2bk (k: an arbitrary natural number. The rest hereinafter is the same as above.) are data communication units such as a personal computer device (PC), a printer, a digital television, and a computer & home electronics each connected to the system via the modular receptacle (not shown) and ADSL.lite modems 3b1 to 3bk, and the reference numerals 3b1 to 3bk are ADSL.lite modems each of which is directly connected to the telephone line C via the modular receptacle (not shown) without the splitter (not shown) and modulates or demodulates data.

In the description below, the data communication units 2b1 to 2bk may be referred to as users 1 to K respectively.

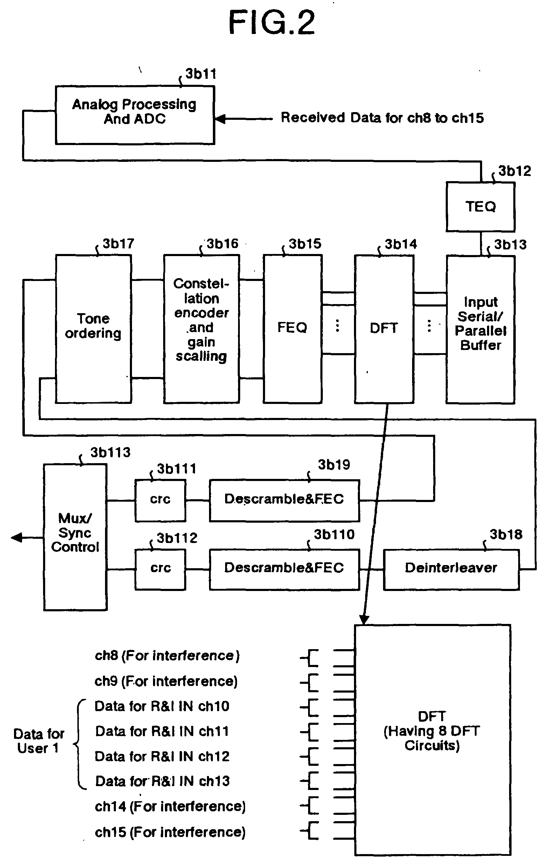

Fig. 2 shows details of configuration in the receiver side of the ADSL.lite modem 3b1 in Embodiment 1 of the DMT communication system according to the present invention.

In the figure, designated at the reference numeral 3b11 is an analog processing·A/D converter (Analog Processing And ADC), at 3b12 a time-domain equalizer (TEQ), at 3b13 an input serial/parallel buffer, at 3b14 a discrete Fourier transform section (DFT), at 3b15 a frequency-domain equalizer (FEQ), at 3b16 a constellation encoder·gain scaling (Constellation encoder and gain scaling), at 3b17 a tone ordering, at 3b18 a deinterleaver, at 3b19 and 3b110 a descramble·forward error collection (Descramble and FEC), at 3b111 and 3b112 a cyclic redundancy check (crc), and at 3b113 a mux/sinc control respectively.

It should be noted that the other ADSL.lite modems 3b2 to 3bk within the subscriber-side system B have the same configuration as that of the ADSL.lite modem 3b1, and the ADSL.lite modem 4a within the telephone station-side system A has the same configuration as that of the ADSL.lite modem 3b1 except the point that the discrete Fourier transform section is formed with discrete Fourier transform circuits of 256 units, namely by all channels for down-stream ADSL subcarriers.

Herein, the discrete Fourier transform section (DFT) 3b14 is so configured that the section receives, of subcarriers as down-stream subcarriers for 256 channels of ch0 to ch255 formed with the DMT-multiple subcarrier (for instance, 64 channels of ch0 to ch63 are used for up-stream subcarriers), only R (real axis data) and I (imaginary axis data) for ch10 to ch13 allocated to the user and transmits the rest of the data to the next processing.

However, the discrete Fourier transform section (DFT) 3b14 according to Embodiment 1 comprises 8 discrete Fourier transform circuits (not shown) so as to execute computations for 8 channels in total of ch8 to ch15 which are derived from (allocated 4 channels) + (4 channels in total of each 2 channels before and after the allocated subchannels) assuming that interference between the subchannels may reach around each 2 channels before and after the subchannels respectively.

Each area of each 2 channels before and after the subchannels, each of which is an area where the interference between the subchannels reaches, is set as required according to a level of the interference between the channels, thus a number of channels in both sides of the subchannels may be increased or decreased. Furthermore, which channels (subcarriers) are allocated to the user should be confirmed between the transmission side and receiver side in a stage of negotiation or training before communication is started.

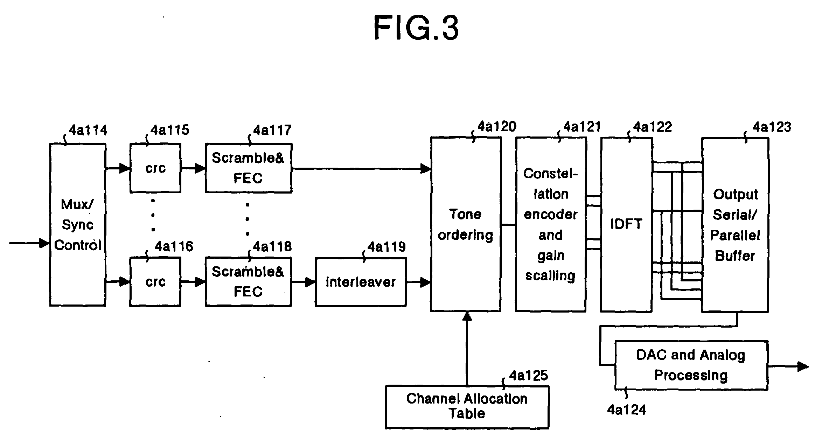

Fig. 3 shows details configuration of a transmitter side of an ADSL.lite modem 4a in Embodiment 1 of the DMT communication system according to the present invention.

In this figure, designated at the reference numeral 4a114 is a mux/sinc control, at 4a115 and 4a116 are cyclic redundancy checks (crc), at 4a117 and 4a118 are scramble·forward error collection (Scramble & FEC), at 4a119 an interleaver, at 4a120 a tone ordering, at 4a121 a constellation encoder·gain scaling (Constellation encoder and gain scaling), at 4a122 an inverted discrete Fourier transform section (IDFT), at 4a123 an output serial/parallel buffer, at 4a124 a DA converter·analog processing (DAC and Analog Processing), and at 4a125 an allocation channel table in which allocation of channels ch to the data communication units provided in the system is previously set for each subscriber-side system B respectively. The configuration in Fig. 3 is very similar to the configuration of the receiver side except the that there is no TEQ and FEQ.

Each of the ADSL.lite modems 3b1 to 3bk in the subscriber-side system B has the same configuration as that of the ADSL.lite modem 4a. Channels allocated to the ADSL.lite modems 3b1 to 3bk or to the data communication units 2b1 to 2bk are set in the respective allocation channel table.

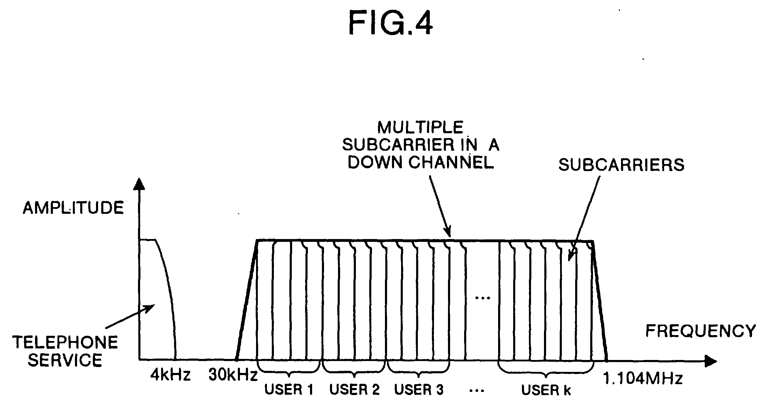

Fig. 4 shows a method of dividing a down channel in the DMT communication system according to Embodiment 1. Namely, the DMT communication system according to Embodiment 1 shows a method of dividing a DMT-modulated/demodulated multiple subcarrier in the subscriber-side system B when 256 DMT-demodulated/demodulated subcarriers of ch0 to ch255 between 30 kHz to 1.1 MHz are transmitted downward, namely when data transmission is executed from the telephone station-side system A to the subscriber-side system B.

More specifically, 4 subcarriers, namely channels are allocated to each user such that 4 subcarriers of ch10 to ch13 are allocated to the data communication unit 2b1 as the user 1, the next 4 subcarriers of ch14 to ch17 are allocated to the data communication unit 2b2 as the user 2, and the next 4 subcarriers of ch18 to ch21 are allocated to the data communication unit 4b3 as the user 3 ···.

A result of allocation of each subcarriers obtained by dividing the DMT modem multiple subcarrier thereinto to each user is entered and registered, in the stage of negotiation before data communication is started, in the allocation channel table 4a125 of the ADSL.lite modem 4a in the telephone station-side system A for each one or a plurality of subscriber-side systems B, and also at least a channel used by the user is entered and registered in the table (not shown) of channel allocation to the ADSL.lite modems 3b1 to 3bk in each of the subscriber-side systems B.

Therefore, when data is transmitted downward from the telephone station-side system A to the subscriber-side system B, the subscriber-side system B is connected to data communication units such as a personal computer, a printer, and a computer & home electronics as 64 users at maximum derived from the computation of 4 channels/256 channels, the units can concurrently receive data.

However, in high-frequency subcarriers, as there are many cases where a small amount of transmission bits tends to be allocated thereto because an amount of data transmission is attenuated through a communication line, as shown in Fig. 4, a larger number of subcarriers such as 6 subcarriers than those when a low-frequency band is used is allocated to the data communication unit 2bk as the user K to which high-frequency subcarriers are to be allocated. In the case employed as described above, a number of users in each subscriber-side system becomes less than 64 units.

Next description is made for operations. In Embodiment 1, as the receiver side of the ADSL.lite has a feature, a case where data is transmitted downward from the telephone station-side system A to the subscriber-side system B will be described.

At first, data is transmitted from the data communication network N2 such as the Internet to the telephone line C via the ATM unit 2a, router 3a, and ADSL.lite modem 4a.

In that process, the data is modulated by the mux/sinc control 4a114, and specified processing is executed to the data by the crcs 4a115 and 4a116 as well as by the scramble·forward error collections 4a117 and 4a118 within the ADSL.lite modem 4a, and in some cases, the data is subjected to interleave processing by the interleaver 4a119. The processing until this step is the same as that based on the conventional technology.

Then, in Embodiment 1, the tone ordering 4a120 allocates the data to which the processing described above is executed according to the channel allocation in the subscriber-side system B set in the allocated-channel table 4a125 to each channel consisting of subcarriers (subchannels) in the DMT modem scheme obtained by being divided into each of the data communication units 2b1 to 2bk as a user in the subscriber-side system B.

For example, it is assumed that channel allocation is set in the allocation channel table 4a125 such that, in the case of the subscriber-side system B, channels ch10 to ch13 are allocated to the data communication unit 2b1, channels ch14 to ch17 are allocated to the data communication unit 2b2, channels ch18 to ch21 are allocated to the data communication unit 2b3, and channels ch22 to ch25 are allocated to the data communication unit 2bk, and the tone ordering 4a120 allocates data for the data communication units 2b1 to 2bk to each channels according to the channel allocation for transmission.

The operation after this is the same as that in the case of the ordinary ADSL.lite modem. Namely, the constellation encoder·gain scaling 4a121 sets constellation and gain, the inverted discrete Fourier transform section (IDFT) 4a122 performs inverted discrete Fourier transform, the output serial/parallel buffer 4a123 converts the parallel output to serial output, and the DA converter·analog processing 4a124 performs digital-to-analog conversion to the data and at the same time transmits the data to the telephone line C by passing it through an LPF (not shown) to send the data to the subscriber-side system B. Then, in the subscriber-side system B, the ADSL.lite modems 3b1 to 3bk receive the data via the telephone line C and modular receptacle (not shown) and so on.

A multiple subcarrier in the DMT modem scheme is previously divided, divided subcarriers to be used for data communications, namely channels (ch) to be used are decided for each of the data communication units 2b1 to 2bk as users in the subscriber-side system B, and are set in each of the allocation channel tables (not shown) respectively, so that each of the data communication units 2b1 to 2bk demodulates only data for a channel allocated to the user.

For example, each modem demodulates only 4 channels allocated to the user according to each of the allocated-channel tables (not shown). Namely, such that the ADSL.lite modem 3b1 demodulates the channels ch10 to ch13, the ADSL.lite modem 3b2 demodulates the channels ch14 to ch17, the ADSL.lite modem 3b3 demodulates the channels ch18 to ch21, and the ADSL.lite modem 3bk demodulates the channels ch22 to ch25.

To describe more specifically the case of the ADSL.lite modem 3b1 as an example, as shown in Fig. 2, the ADSL.lite modem 3b1 receives only data for the channels ch8 to ch15 by receiving one channels each before and after the channels ch10 to ch13 allocated to the user in consideration of interference between subchannels, namely interference between channels in Embodiment 1 among the channels ch0 to ch255 in the DMT system via the telephone line C.

Then, in the ADSL.lite modem 3b1, the analog processing·A/D converter 3a11 receives only data for the channels ch8 to ch15, subjects the data to LPF, and converts an analog wave to a digital wave by passing the data through the A/D converter. The time-domain equalizer (TEQ) 3b12 then performs adaptive equalization processing for the time domain. The data subjected to the adaptive equalization processing by the time-domain equalizer (TEQ) 3b12 is converted from the serial data to parallel data through the input serial/parallel buffer 3b13. The discrete Fourier transform section (DFT) 3b14 then subjects the data to discrete Fourier transform.

The discrete Fourier transform section (DFT) 3b14 subjects only R (real axis data) and I (imaginary axis data) for 8 channels of ch8 to ch15 for demodulation and transmits the data to the next processing because it is assumed that interference with the subchannels reaches each 2 channels before and after thereof although communications are executed by limiting a number of subcarriers to 4 in the ADSL.lite modem 3b1.

The discrete Fourier transform processing in which much time should be spent due to the heaviest load of computation in the processing of the ADSL.lite modem 3b1 requires just the processing of subjecting only 8 subcarriers to discrete Fourier transform even including interference reaching each 2 channels before and after the 4 channels set as data-propagating channels, therefore the load of computation is reduced and the processing can be performed with higher speed as compared to the case where each ADSL.lite modem demodulates all the subchannels in the DMT modem scheme as that in the conventional technology.

The processing after this is similarly to that of the conventional type of ADSL.lite modem. Namely, the frequency-domain equalizer (FEQ) performs adaptive equalization processing of a frequency domain, then the constellation encoder·gain scaling 3b16 carries out bit distribution and gain distribution to reproduce constellation data, further the tone ordering 3b17 converts the data to serial data, the descramble·forward error collection 3b19 subjects the data to FEC and descramble processing, and the deinterleaver 3b18 subjects the data to deinterleave processing in some cases, the descramble·forward error collection 3b110 subjects the data to FEC and descramble processing, then, the crcs 3b111 and 3b112 subjects the data to cyclic redundancy check, and the mux/sinc control 3b113 reproduce the data.

The data reproduction processing as described above is also executed in the ADSL.lite modems 3b2 to 3bk for the data communication units 2b2 to 2bk, so that data is reproduced from subcarriers of 8 channels in total of 4 channels allocated to each modem and each 2 channels before and after the 4 channels.

Consequently, with the DMT communication system according to Embodiment 1, the subscriber-side system B divides an ADSL-multiple subcarrier in the DMT modem scheme into subcarriers in each frequency band for each data communication unit which uses subcarriers in each frequency band, so that an ADSL-multiple subcarrier in the DMT modem scheme can be used in a plurality of data communication units via a telephone line C installed in individual houses, high-speed data through the ADSL.lite modem can concurrently be used by a plurality of users, and further a plurality modes of data communications can be executed via the telephone line C even when telephoning in the audio band is executed by a telephone set 1b via the telephone line C, which allows resources such as a telephone line C and its wiring to be made extremely effective use of.

Especially, in Embodiment 1, as the ADSL.lite modem is used as an ADSL modem, a splitter is not required, so that an ADSL-multiple subcarrier in the DMT modem scheme can be used in a plurality of data communication units via an existing telephone line C only by connecting the ADSL.lite modem to a modular jack thereof, which allows a LAN to be constructed extremely simply.

Although the ADSL.lite modem 3b in the receiver side is configured with the hardware as shown in Fig. 2 in Embodiment 1, the present invention is not limited to the above embodiment, thus functions of the ADSL.lite modems 3b1 to 3bk shown in Fig. 2 may be realized through execution of a program. In this case, if the program is executed by each CPU (not shown) in personal computers (PC), a printer, and the data communication units 2b1 to 2bk of computers & home electronics each of which can perform data communications via a network with the ADSL.lite modems 3b1 to 3bk connected thereto, the functions can be realized without requiring additional hardware such as the ADSL.lite modems 3b1 to 3bk shown in Fig. 2, which allows increase of cost to be prevented.

In addition, even if the functions of the ADSL.lite modem 3b shown in Fig. 2 are realized through execution of the program as described above, in Embodiment 1, the discrete Fourier transform section (DFT) 3b14 subjects only 8 subcarriers to the discrete Fourier transform processing in which time is spent the most of the processing in the ADSL.lite modem 3b1 even including interference reaching each 2 channels before and after 4 channels set as data-propagating channels, therefore the load of computation is reduced to 1/32 derived from the computation of 8 channels/256 channels as compared to that based on the conventional technology, so that even in execution of a program of software, sufficiently high-speed processing can be insured.

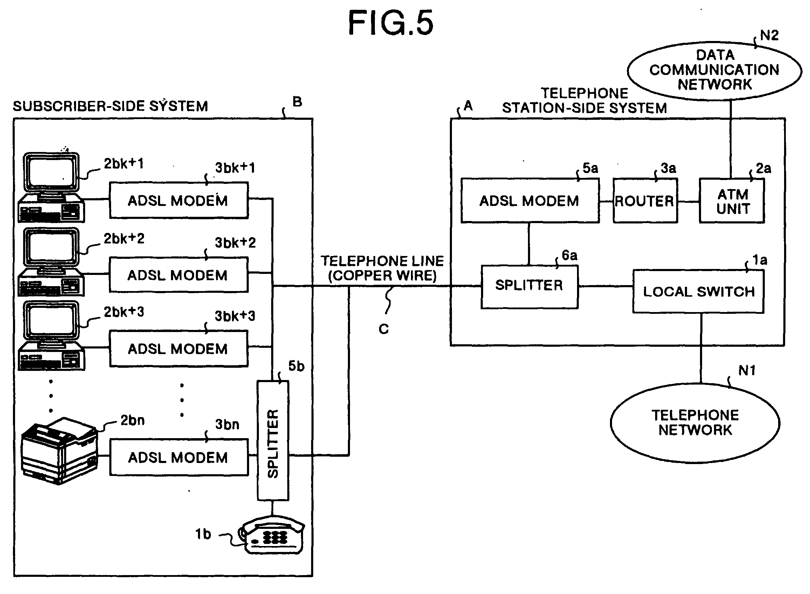

In Embodiment 1 described above, although the DMT communication system using the ADSL.lite modem without a splitter has been described, the present invention is not limited to the above embodiment, thus, for example, an ordinary ADSL.lite modem for executing ADSL communications via splitters 6a and 5b as shown in Fig. 5 maybe used, or the DMT communication system may be constructed by using an ADSL modem with a slitter provided only in the telephone station-side system A as shown in Fig. 5 and using an ADSL modem without a splitter in the subscriber-side system B as shown in Fig. 1 and vice versa.

A DMT communication system according to Embodiment 2 is an improved DMT communication system based on Embodiment 1, and more specifically, the improved system is characterized in that each data communication unit can execute data transmission without occurrence of interference between subcarriers when an ADSL-multiple subcarrier in the DMT modem scheme is divided into subcarriers in each frequency band for each data communication unit and the divided subcarriers are used. It should be noted that the configuration of the DMT communication system itself is the same as that of Embodiment 1 shown in Fig. 1 and Fig. 2, so that description is made for the configuration with reference to Fig. 1 and Fig. 2.

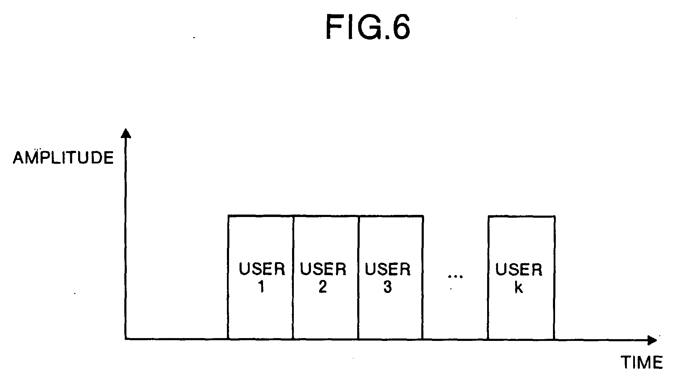

Fig. 6 shows a timing of data transmission to users in a subscriber-side system B of a DMT communication system according to Embodiment 2.

Namely, in the subscriber-side system B of the DMT communication system according to Embodiment 2, when the data communication units 2b1 to 2bk as users 1 to k or the ADSL.lite modems 3b1 to 3bk transmit data to the telephone station-side system A, the data is transmitted based on time division like user 1, user 2, user 3, ···, user k as shown in Fig. 5.

That is because when data is transmitted from the subscriber-side system B to the telephone station-side system A, namely in the upward direction, and if a multiple-subcarrier in the DMT modem scheme is divided into subcarriers for each user and data communication units as users concurrently transmit data respectively, interference between subcarriers for different users adjacent to each other occurs, but in that process, since each of the data communication units as users whose subcarriers are adjacent to each other does not know what kind of data the unit adjacent thereto transmits, the telephone station-side system A as a reception side can not demodulate the data due to unrecognized influence of interference from the adjacent channel (each 2 channels before and after thereof in Embodiment 1).

As for this timing, allocation of timings to users should be confirmed between the subscriber-side system B as a transmission side and the telephone station-side system A as a reception side in a stage of a training period or negotiation before data communications.

Therefore, as shown in Fig. 6, if the data communication units 2b1 to 2bk as the users 1 to k transmit data to the telephone station-side system A based on time division, interference between subcarriers for adjacent users does not occur, thus the telephone station-side system A in the reception side can surely demodulate data from the data communication units 2b1 to 2bk as the users 1 to k without any error.

The telephone station-side system A concurrently transmits, when having surely demodulated data from the data communication units 2b1 to 2bk without any error and then transmitting the data to the subscriber-side system B or to another subscriber-side system B, as the data is transmitted downward, the data to the plurality of data communication units by using the subcarriers obtained through division of an ADSL-multiple subcarrier in the DMT modem scheme thereinto for each data communication unit like in Embodiment 1.

Consequently, with the DMT communication system according to Embodiment 2, the data communication units 2b1 to 2bk as users 1 to k in the subscriber-side system B or the ADSL.lite modems 3b1 to 3bk transmit data to the telephone station-side system A based on time division, therefore, even when an ADSL-multiple subcarrier in the DMT modem scheme is divided into subcarriers in each frequency band for each data communication unit and the divided subcarriers are used by each of the data communication units 2b1 to 2bk, the data communication units 2b1 to 2bk can transmit data without occurrence of interference between subcarriers. Thus, the telephone station-side system A as the receiver can surely demodulate data from the data communication units 2b1 to 2bk without any error.

A DMT communication system according to Embodiment 3 is an improved version of the DMT communication system based on Embodiment 2. Thus system is characterized in that, by providing therein a central office server for allocating communication addresses to data communication units as users in a subscriber-side system and managing the communication addresses, a network such as a LAN within a subscriber-side system or within a plurality of subscriber-side systems in one telephone station area is constructed through an existing telephone line C.

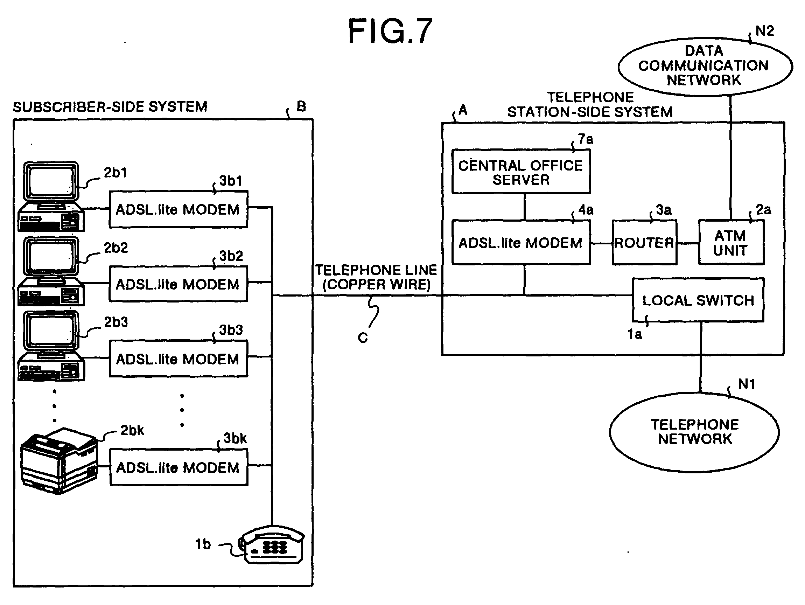

Fig. 7 shows the entire configuration of the DMT communication system according to Embodiment 3. Only newly added components will be described below. In the telephone station-side system A, a central office server 7a is provided as a data-communication managing section connected to the ADSL.lite modem 4a for registering an address (an IP address when the data communication network N2 is the Internet) set in a data communication unit as a user in each of the subscriber-side systems B, and deciding whether data communications should be performed via the data communication network N2 or data communications should be performed without using the data communication network N2.

The central office server 7a is configured so as to enable management of data communications, if desired from data communication units as users in the telephone station area under the telephone station-side system A, namely in all the subscriber-side systems connected to the telephone station-side system A through the telephone line C, by registering therein communication addresses of all the data communication units.

Further, it is assumed that communication addresses such as IP addresses for performing data communications via the data communication network N2 are set in the data communication units 2b1 to 2bk as users in the subscriber-side system B.

It should be noted that the other sections of the configuration are the same as those in Embodiment 1 shown in Fig. 1 or the like, so that the same reference numerals are assigned to those corresponding to the sections in Embodiment 1, and description thereof is omitted herein.

Next description is made for operations. At first, a case, for example, where a data communication unit 2b1 in the subscriber-side system B performs data communications through the data communication network N2 such as the Internet will be described.

In this case, the data communication unit 2b1 transmits data by specifying a communication address of a data communication unit (not shown) as a target for transmission via the data communication network N2. Then, the data is transmitted to the telephone station-side system A via the ADSL.lite modem 3b1 and the telephone line C, and the telephone station-side system A inputs the data into the central office server 7a via the telephone line C and the ADSL.lite modem 4a.

The central office server 7a receives the data, decodes the address set in the header or some other place of the data, and determines whether the communication address is an address having been registered and managed, namely any communication address of data communication units in the subscriber-side system connected to the telephone station-side system A through the telephone line C or not.

In this case, as it is determined that the address set in the data by the data communication unit 2b1 is a communication address of a data communication unit (not shown) as a target for transmission via the data communication network N2, the central office server 7a determines that the communication address is not registered, and sends the data from the ADSL.lite modem 4a to the data communication network N2 via the router 3a and the ATM unit 2a.

Next description is made for a case where data communications are executed to a data communication unit 2bk such as a printer in the subscriber-side system B. In this case, the data communication unit 2b1 transmits data by specifying the communication address of the data communication unit 2b1 as a communication partner. Then, the data is transmitted to the telephone station-side system A via the ADSL.lite modem 3b1 and the telephone line C, and the telephone station-side system A inputs the data into the central office server 7a via the telephone line C and the ADSL.lite modem 4a.

The central office server 7a receives the data, decodes the address set in the header or some other place of the data, and determines whether the communication address is an address having been registered, namely any communication address of data communication units within the subscriber-side system connected to the telephone station-side system A through the telephone line C or not. The steps so far are the same as those in the case where communications are made via the data communication network N2.

In this case, however, as it is determined that the address set in the data by the data communication unit 2b1 is a communication address of the data communication unit 2bk within the subscriber-side system B in the telephone station area, the central office server 7a determines that the communication address is registered, and does not send the data to the data communication network N2 via the router 3b and the ATM unit 2b, but directly sends the data to the data communication unit 2bk according to the communication address.

Namely, the central office server 7a directly sends the data from the ADSL.lite modem 4a to the data communication unit 2bk via the telephone line C and the ADSL.lite modem 3bk according to the communication address.

The DMT communication system according to Embodiment 3 is the improved version of Embodiment 2, namely based on the DMT communication system according to Embodiment 1 and Embodiment 2, therefore, when down-stream data, namely data is transmitted from the telephone station-side system A to the subscriber-side system B, the telephone station-side system A concurrently sends the data to a plurality of data communication units through subcarriers allocated to each of the plurality of data communication units in the subscriber-side system B, on the other hand, when up-stream data, namely data is transmitted from the subscriber-side system B to the telephone station-side system A, the plurality of data communication units transmit each data to the telephone station-side system A based on time division by using each subcarriers allocated to each of the plurality of data communication units in the subscriber-side system B.

Consequently, with the DMT communication system according to Embodiment 3, an ADSL-multiple subcarrier in the DMT modem scheme is divided into subcarriers in each frequency band for each data communication unit and the divided subcarriers are used, and at the same time an address is allocated to a data communication unit as each user in the subscriber-side system B, so that the data communication units sharing an existing telephone line C can get concurrent access to the data communication network N2 such as the Internet through the telephone line C and receive data, and also can perform a plurality of data communications via the telephone line C even when telephoning in the audio band is executed by a telephone set 1b through the telephone line C, which allows resources such as a telephone line C and its wiring to be made extremely effective use of.

In addition, with the DMT communication system according to Embodiment 3, the telephone station-side system A has a central office server 7a provided therein which manages communication addresses of a plurality of data communication units within subscriber-side systems B connected to the telephone station-side system A via the telephone line C, and data communication can be executed without using the data communication network N2 on condition that the data communication is executed between the data communication units whose communication addresses are managed thereby, so that communications can be made among data communication units like a LAN via the existing telephone line C and the central office server 7a without using the data communication network N2 such as the Internet as a main line.

As a result, a LAN can be constructed within a subscriber-side system B and further within a telephone station area under a telephone station-side system A at maximum, namely within subscriber-side systems connected to the telephone station-side system A via a telephone line C by using the existing telephone line C and the central office server 7a, and at the same time, data communications within the LAN can be executed without using the data communication network N2 such as the Internet, therefore the data communications are not restricted by throughput to the data communication network N2, thus a low-cost and high-speed LAN can be constructed.

Although description has been made for the case of data communications between the data communication unit 2b1 and the data communication unit 2bk within the subscriber-side system B as an example, Embodiment 3 is not limited to the case described above. Data communications can also be executed, through the telephone line C without using a data communication network N2, within a telephone station area under the telephone station-side system A, namely between data communication units within subscriber-side systems B connected to the telephone station-side system A through the telephone line C under management of addresses by the central office server 7a.

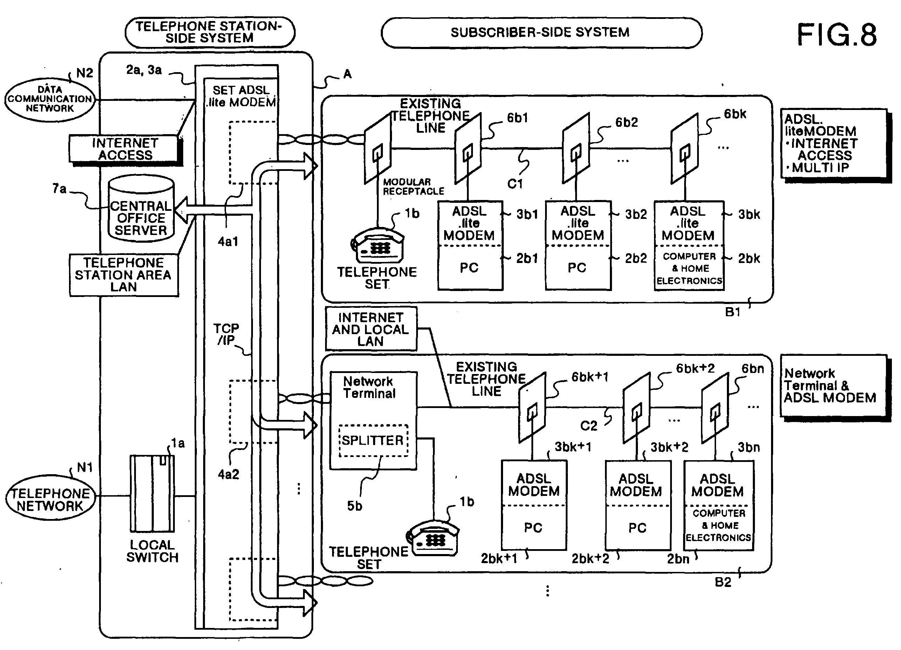

Fig. 8 shows a state of data communications through the telephone line C without using a data communication network N2 between data communication units in subscriber-side systems connected to the telephone station-side system A through the telephone line C under management of addresses by the central office server 7a.

Fig. 8 shows a state of data communications among a telephone station-side system A substantially the same as the telephone station-side system A shown in Fig. 7, a splitterless subscriber-side system B1 substantially the same as that of the subscriber-side system B shown in Fig. 1 or Fig. 7 connected to the telephone station-side system A through the telephone line C, and a subscriber-side system B2 having a splitter substantially the same as that of the subscriber-side system B shown in Fig. 5.

In this case, when the data communication unit 2b1 such as a personal computer (PC) in the subscriber-side system B1 performs data communications by specifying a communication address of a data communication unit 2bk+1 such as a personal computer (PC) in another subscriber-side system B2, the data is sent to the telephone station-side system A through a data communication unit 2b1, an ADSL.lite modem 3b1, a modular receptacle 6b1, and a telephone line C1.

Then, the telephone station-side system A transmits the data to the subscriber-side system B2 though an ADSL.lite modem 4a of a set ADSL.lite modem, a central office server 7a, an ADSL.lite modem 4a2, and a telephone line C2 according to the communication address set in the transmitted data so as to bypass the data communication network N2 such as the Internet.

In the subscriber-side system B2, data is transmitted to the data communication unit 2bk+1 such as a personal computer (PC) via a splitter 5b in a network terminal, a modular receptacle 6bk+1, and an ADSL.lite modem 3bk+1.

It should be noted that, when the data communication network N2 is the Internet and a communication address is an Internet protocol (IP) address, data communication via the telephone lines C1 and C2 is executed based on the TCP/IP protocol as shown in the figure.

Consequently, with Embodiment 3, when the subscriber-side systems B1 and B2 are a school, an office, a household, or the like, the ADSL.lite modems 3b1 to 3bk and ADSL.lite modems 3bk+1 to 3bn are connected to the modular jacks 6b1 to 6bn for an existing telephone set, and the data communication units 2b1 to 2bk such as a personal computer (PC), a printer, a digital television, other computer equipment, and a computer & home electronics are also connected thereto, so that it is possible to get concurrent access to the data communication network N2 such as the Internet, send data via the data communication network N2 to a printer or the like, and to print out the data like a network printer.

In addition, data communications are possible via the telephone lines C1, C2 and the central office server 7a like a LAN not only within the subscriber-side system B1 and within the subscriber-side system B2, but also within the data communication units 2b1 to 2bn between the subscriber-side system B1 and another subscriber-side system B2 in the telephone station area under the telephone station-side system A without using the data communication network N2 such as the Internet as a main line, thus the data communication is not restricted by throughput to the data communication network N2, and a low-cost and high-speed LAN can be constructed between subscriber-side systems, and at the same time a plurality modes of data communications can be executed via a telephone line even when telephoning in the audio band is executed by a telephone set via the telephone line, which allows resources such as a telephone line and its wiring within a telephone station area to be made extremely effective use of.

In Embodiments 1 to 3, although the data communication unit according to the present invention has been described with reference to the modem in the ADSL communication system such as an ADSL.lite modem, the present invention is not limited to the above case, it is thus applicable also to a modem for xDSL communication such as HDSL communication and SDSL communication other than the ADSL communication mode, and also applicable to data communications other than the xDSL, and furthermore, applicable to any data communication unit other than the modems.

As described above, with the present invention, there are steps of dividing a carrier in the discrete multitone modem scheme into a plurality of subcarriers in each frequency band, and allocating each divided subcarriers to a plurality of data communication units respectively, and each of the data communication units executes data communications by using the allocated subcarriers, so that discrete multitone subcarriers can concurrently be used by a plurality of units, and at the same time a plurality modes of data communications can be executed via a telephone line even when telephoning in the audio band is executed by a telephone set via the telephone line, which allows resources such as a telephone line and its wiring to be made extremely effective use of.

In another aspect of the present invention, a plurality of data communication units transmit data based on time division by using subcarriers allocated to each unit respectively, so that even when divided discrete multitone subcarriers are used, the plurality of data communication units can transmit data under prevention of interference between the subcarriers.

In another aspect of the present invention, each of a plurality of data communication units subjects only a band of subcarriers allocated to the unit to Fourier transform for its demodulation, so that demodulation processing can be speeded up, and at the same time configuration of a receiver or the like for receiving and demodulating data can be minimized, and further, when the data communication unit subjects only a band of subcarriers allocated to the unit to Fourier transform for its demodulation based on a program, an additional hardware component can be prevented, thus increase of cost can be prevented.

In another aspect of the present invention, when data with a communication address set therein is received, it is determined whether the communication address set in the data has been registered as any of the communication addresses within the telephone station area or not, and when it is determined that the communication address set in the data is the registered one, the data is directly transmitted to the target data communication unit without using a data communication network, so that a LAN can be constructed within a registered area such as a telephone station area through an existing telephone line, and at the same time, data communications within the LAN are executed without using the data communication network, thus the data communications are not restricted by throughput to the data communication network, which allows a low-cost and high-speed LAN to be constructed.

In another aspect of the present invention, a system without a splitter like an ADSL.lite is applied as the discrete multitone communication system, so that data communications can be executed only by connecting the system to a modular jack of an existing telephone line among a plurality of data communication units within one telephone station area using the telephone line, which allows a data communication network where data communications can concurrently and easily be executed to be constructed by using an existing telephone line.

### INDUSTRIAL APPLICABILITY

As described above, the discrete multitone communication system and discrete multitone communication method according to the present invention are applicable to a communication system where a plurality of data communication units can concurrently execute data communications in a communication system using subcarriers in the DMT modem scheme.

## Claims

1. A discrete multitone communication system for performing data communications between a plurality of data communication units via a telephone line based on a discrete multitone modem scheme; wherein
a carrier is divided in the discrete multitone modem scheme into a plurality of subcarriers in each frequency band,
each divided subcarriers is allocated to each of the plurality of data communication units, and
each of said data communication units performs data communications by using the allocated subcarriers.

2. The discrete multitone communication system according to Claim 1; wherein each of said data communication units transmit data based on time division by using the allocated subcarriers.

3. The discrete multitone communication system according to Claim 1; wherein each of said data communication units has a Fourier transform unit for subjecting only a band of the subcarriers allocated to the unit to Fourier transform for its demodulation.

4. The discrete multitone communication system according to Claim 1; wherein each of said data communication units subjects only a band of the subcarriers allocated to the unit to Fourier transform for its demodulation based on a program respectively.

5. The discrete multitone communication system according to Claim 1; wherein each of said data communication units has a communication address set therein so as to enable data communications via a data communication network respectively, and performs data communications according to the communication address via the data communication network.

6. The discrete multitone communication system according to Claim 1; wherein each of said data communication units has a communication address set therein so as to enable data communications via a data communication network respectively, and further has a data communication managing unit, connected to plurality of said data communication units via a telephone line, comprising the steps of registering therein the communication addresses of the plurality of data communication units, determining, when data with a communication address of a communication unit as a target for transmission set therein is received from an arbitrary data communication unit among the plurality of data communication units, whether the communication address set in the data is any of the communication addresses of the registered data communication units or not, making the data communication unit execute data communications with the target data communication unit via the data communication network when it is determined that the communication address set in the data is not any of the communication addresses of the registered data communication units, and making the arbitrary data communication unit and the communication unit indicated by the communication address set in the data directly communicate to each other without using the data communication network when it is determined that the communication address set in the data is any of the communication addresses of the registered data communication units.

7. The discrete multitone communication system according to Claim 1; wherein an ADSL.lite communication system is used as the discrete multitone modem scheme.

8. A discrete multitone communication method for performing digital communications via a telephone line based on the discrete multitone modem scheme; wherein
a carrier in the discrete multitone modem scheme is divided into a plurality of subcarriers in each frequency band;
each divided subcarriers is allocated to each of a plurality of data communication units respectively; and
each of said data communication unit performs data communications by using the allocated subcarriers respectively.
